# EUROPEAN PATENT SPECIFICATION

(11) **EP 2 371 679 B1**
(45) Date of publication and mention of the grant of the patent: **20.11.2013**
(21) Application number: 09834478.1
(22) Date of filing: 24.12.2009
(51) Int. Cl.: B62D 25/08, B62D 29/00

(54) **SHIELD PLATE AND VEHICLE STRUCTURE PROVIDED WITH THE SHIELD PLATE**
ABSCHIRMUNGSTAFEL UND MIT DER ABSCHIRMUNGSTAFEL AUSGESTATTETE FAHRZEUGSTRUKTUR
PLAQUE DE PROTECTION ET STRUCTURE DE VÉHICULE ÉQUIPÉE D'UNE TELLE PLAQUE DE PROTECTION

(30) Priority: 26.12.2008 JP 2008333304; 22.12.2009 JP 2009290142
(43) Date of publication of application: 05.10.2011
(73) Proprietor: Nitto Denko Corporation, Ibaraki-shi Osaka 567-8680 (JP)
(72) Inventor: TACHIBANA, Katsuhiko, Ibaraki-shi Osaka 567-8680 (JP); KADOTA, Masayuki, Ibaraki-shi Osaka 567-8680 (JP); MUTO, Shinji, Ibaraki-shi Osaka 567-8680 (JP); KOBAYASHI, Kenji, Ibaraki-shi Osaka 567-8680 (JP); MORITA, Hideaki, Ibaraki-shi Osaka 567-8680 (JP)
(74) Representative: Schwabe - Sandmair - Marx
(86) International application number: PCT/JP2009/007199
(87) International publication number: WO 2010/073672

(56) References cited:
- EP-A1- 2 113 447
- WO-A1-2006/059049
- JP-A- 5 305 880
- JP-A- 9 315 237
- JP-A- 2002 143 280
- JP-A- 2002 143 280
- JP-A- 2004 210 085
- JP-A- 2006 062 520
- JP-A- 2006 062 520
- JP-A- 2007 137 363
- JP-A- 2007 137 363
- JP-A- 2008 056 106
- JP-A- 2008 056 106
- JP-A- 2008 302 883
- JP-A- 2010 006 313

## Description

### TECHNICAL FIELD

The present invention relates to a shield plate and a vehicle structure provided with the shield plate.

### BACKGROUND ART

Conventionally, most vehicles have an engine room in which an engine is accommodated in the front body of the vehicle. In the rear of the engine room, an air box which takes in ambient air is positioned in the lower position of a windshield.
The inside of a vehicle compartment is usually ventilated by letting the ambient air taken in the air box flow into the vehicle compartment through a vent opening in the cowl top cover. At this time, however, hot air or odor in the engine room inadvertently flows into the vehicle compartment.

Therefore, it is desirable to shut off the flow of such hot air or odor into the vehicle compartment while ambient air is let flow into the vehicle compartment.
For example, a mounting structure of an insulator has been proposed in which when an insulator is mounted to a vehicle body panel in order to shut off air circulating in a space formed of the vehicle body panel, a fender panel, and a fender protector, a mounting means for mounting the insulator is provided with a breaking part broken by an impact force applied to the fender panel (see, for example, the following Patent Document 1).

### [Citation List]

### [Patent Document]

[Patent Document 1] Japanese Unexamined Patent Publication No. 2007-90999

### DISCLOSURE OF THE INVENTION

### PROBLEMS TO BE SOLVED

However, in the mounting structure of the insulator described in the aforementioned Patent Document 1, the breaking part is provided in the mounting means for mounting the insulator, and at the time of the collision of an automobile, the breaking part absorbs an impact of the collision by breaking the mounting means at the breaking part, which detaches the insulator from the fender panel, resulting in deformation of the fender panel.
On the other hand, in the above-mentioned structure, the breaking part is provided at a specific site of the mounting means, so that when the impact at the collision is insufficiently applied to the specific site, the breaking part may not be broken. In such case, the insulator does not fall from the fender panel, making it difficult to deform the fender panel, resulting in less absorption of the impact.

Besides, with the above-mentioned structure, different types of vehicles have different shapes of insulators, so that the breaking part must be positioned at a specific site corresponding to each vehicle type, making it difficult to improve production efficiency.
Therefore, it is an object of the present invention to provide a shield plate capable of reliably absorbing an impact by bending itself regardless of a site to which an external force is applied and of improving production efficiency irrespective of the shape, and a vehicle structure provided with the shield plate.

JP 2008-056106 A relates to a cowl structure of vehicle. In the cowl structure, a cowl space formed between a cowl body and a cowl louver is partitioned into one side in the vehicle width direction and the other side in the vehicle width direction by a partition wall mounted on the cowl body. The partition is mounted on the cowl body in an obliquely inclined condition with respect to an automobile, and when an impact force over a predetermined value is applied on the cowl louver from a top side, the mounting condition on the cowl body is released and the partition wall is fallen. Thus, the cowl louver can be deformed independently from the partition wall, the partition wall need not be adequately weakened, and the design of the partition wall can be facilitated.

EP 2 113 447 A1 relates to an automobile structure, method for manufacturing same, and vehicle comprising such a structure. The structure has a crosspiece comprising an upper element fixed to lower elements e.g. crosspiece liner and central liner, by a partition to form walls delimiting front and rear caissons. The partition has a fixation unit including a connection formed by electric welding points between the partition and the central liner. The fixation unit has connections formed by intumescent joints between the crosspiece liner and the partition.

JP 2004-210085 A relates to a cowl top cover of automobile. A cowl top cover to cover the cowl part of the automobile is constituted of a front panel part positioned below a front hood, a rear panel part a rear end part of which makes contact with a front end part of a front glass and a ventilation part for introducing outside air provided between the front panel part and the rear panel part, and the ventilation part is constituted free to be broken by receiving an impact load from above.

JP 2008-302883 A relates to a cowl louver structure. Since a rib (deformation suppressing means) for suppressing deformation of a cross section in a vehicle longitudinal direction is connected to a front wall part and a rear wall part of the cowl louver, deformation of the cross section like that a clearance between the front wall part and the rear wall part is opened/closed in the vehicle longitudinal direction is suppressed at usual use. Further, when collision load is inputted relative to an upper edge of the front wall part from the vehicle upper part, a cut-in part (deformation promotion means) for promoting deformation of the rib in the vehicle vertical direction is provided on portions other than connection parts relative to the front wall part and the rear wall part at the rib. Therefore, when the collision body collides to the cowl louver from the vehicle upper part, the front wall part is relatively deformed of the vehicle lower part relative to the rear wall part to absorb the impact.

### SUMMARY OF THE INVENTION

It is an object of the present invention to provide an improved and useful shield plate in which the above-mentioned problems are eliminated.

In order to achieve the above-mentioned object, there is provided a shield plate according to claim 1.

Advantageous embodiments are defined by the dependent claims.

Advantageously, a shield plate includes a flat plate shaped member; and a stress-concentrating portion which is formed over the entire surface of the flat plate shaped member and bends when an external force is applied.

In the shield plate, the stress-concentrating portion that bends when an external force is applied is formed over the entire surface of the flat plate shaped member. Therefore, the flat plate shaped member can bend even if an external force is applied to any site of the stress-concentrating portion. In addition, since the stress-concentrating portion is provided over the entire surface of the flat plate shaped member, any shape of the flat plate shaped member allows the stress-concentrating portion to be subjected to an external force.

As a result, the shield plate can reliably absorb an impact and can also improve production efficiency.

In the shield plate, it is preferable that the flat plate shaped member includes a first plate; a second plate opposed to the first plate; and a plurality of struts installed between the first plate and the second plate, and the stress-concentrating portion is a frangible portion formed between the struts.

In the shield plate, the flat plate shaped member is formed from the first plate, the second plate, and the struts, and the frangible portion is formed between the struts.
Therefore, the struts can maintain the strength of the shield plate, and the frangible portion between the struts allows the flat plate shaped member to reliably bend.
In the shield plate, it is preferable that the flat plate shaped member has the frangible portion formed along at least one direction.

In the shield plate, the frangible portion is formed along at least one direction. This allows the flat plate shaped member to reliably bend along one direction at the site to which an external force is applied.
As a result, the shield plate can further reliably absorb an impact at the time of a collision.
In the shield plate, it is preferable that the flat plate shaped member has a plurality of the frangible portions parallely-arranged at spaced intervals in a direction orthogonal to a direction in which the frangible portions are formed.

In the shield plate, a plurality of the frangible portions are parallely-arranged at spaced intervals in the direction orthogonal to the direction in which the frangible portions are formed. This allows the flat plate shaped member to bend in the direction orthogonal to the frangible portion formed direction regardless of a site to which an external force is applied.
As a result, the shield plate can further reliably absorb an impact at the time of a collision.
In the shield plate, it is preferable that the flat plate shaped member has the frangible portions formed along each of three directions, a plurality of the frangible portions being parallely-arranged at spaced intervals in each direction orthogonal to each of the three directions.

In the shield plate, a plurality of the frangible portions are parallely-arranged at spaced intervals in directions orthogonal to the three directions. This allows the flat plate shaped member to bend in any direction regardless of a site to which an external force is applied.
As a result, the shield plate can further reliably absorb an impact at the time of a collision.
In the shield plate, it is preferable that the edgewise crush resistance in a direction in which the frangible portions are parallely-arranged is 0.02 to 0.9 times higher than the edgewise crush resistance in a direction in which the frangible portions are formed.

The shield plate has 0.02 to 0.9 times higher edgewise crush resistance in the direction in which the frangible portions are parallely-arranged than that in the direction in which the frangible portions are formed. In other words, the edgewise crush resistance in the direction in which the frangible portions are parallely-arranged is set lower than that in the frangible portion formation direction. Therefore, the application of an external force from the direction in which the frangible portions are parallely-arranged allows the flat plate shaped member to easily bend.

As a result, the shield plate can more reliably absorb the impact from the direction in which the frangible portions are parallely-arranged.
It is preferable that the shield plate further includes a reinforcing portion partially formed in the flat plate shaped member.
The reinforcing portion can reinforce a desired site in the shield plate. Therefore, the strength of the desired site can be improved.

It is preferable that the shield plate further includes a bending portion, different from the stress-concentrating portion, partially formed in the flat plate shaped member and bends when an external force is applied.
In the shield plate, a desired site of the flat plate shaped member can be bent.
In the shield plate, it is preferable that the bending portion is formed along one direction and is bendable along the one direction when mounted to a structural member and/or when flow of a liquid and/or a solid arises in a space of the structural member.

In the shield plate, when the structural member is formed in a complex shape, the flat plate shaped member is bent, so that it can be reliably positioned in the structural member.
Alternatively, bending of the flat plate shaped member allows the liquid and/or the solid in the space of the structural member to pass through.
In the shield plate, it is preferable that the bending portion is formed by hot pressing in a thickness direction of the flat plate shaped member, a single-cut line inclined along the one direction is formed on one surface of the bending portion and the other surface thereof, the single-cut line in one surface of the bending portion and the single-cut line in the other surface of the bending portion intersect when projected in the thickness direction.

In the shield plate, the single-cut line can improve movability of the bending portion, and can also improve durability of the bending portion because the single-cut lines in one surface and the other surface of the bending portion are intersecting when projected in the thickness direction.
In the shield plate, it is preferable that an elastic member is provided in at least one portion of the peripheral portion of the flat plate shaped member.

In the shield plate, the elastic member is positioned in the peripheral portion of the flat plate shaped member. Therefore, when the shield plate is mounted in the space in the structural member, the elastic member deforms into the shape of the space in the structural member to firmly stick to the structural member.
As a result, the shielding effect can be improved by firmly sticking the shield plate to the structural member with simple construction.

In the shield plate, it is preferable that the elastic member includes a fitting portion which fits over the peripheral portion so as to sandwich the peripheral portion, and an elastic portion positioned on the opposite side of the flat plate shaped member relative to the fitting portion.
In the shield plate, the elastic member includes a fitting portion which fits over the peripheral portion so as to sandwich the peripheral portion, and an elastic portion positioned on the opposite side of the flat plate shaped member relative to the fitting portion.

Therefore, the elastic member can be reliably fixed to the flat plate shaped member by sandwiching the peripheral portion of the flat plate shaped member with the fitting portion, and when the shield plate is attached to the space in the structural member, the elastic portion can be reliably firmly stuck to the structural member.
In the shield plate, it is preferable that the elastic member includes an elastic layer and an adhesive layer formed on a surface of the elastic layer, and the elastic member has an overlapping portion positioned outside the peripheral portion and overlapped by mutually bonding the elastic layer via the adhesive layer, and an attached portion stuck to the peripheral portion by continuously bonding one surface and the other surface of the peripheral portion.

In the shield plate, the attached portion allows the overlapping portion to fix to the flat plate shaped member, and the overlapping portion can reliably firmly stick to the structural member to which the shield plate is attached.
It is preferable that the shield plate further includes a flexible sheet laminated on at least one surface of the flat plate shaped member, incudes an extending portion and extended outward from the peripheral portion of the flat plate shaped member.

In the shield plate, the flexible extending portion can be reliably attached to the structural member where the shield plate is mounted.
On the other hand, bending of the flexible extending portion allows the shield plate to be reliably positioned in the structural member having a complex shape, or bending of the flexible extending portion allows a liquid and/or a solid in the space in the structural member to pass through, and the space in the structural member can be reliably shut off.

It is preferable that the shield plate further includes a fixing member attached to the flat plate shaped member and fixable to the space in the structural member.
The shield plate is provided with the fixing member fixable to the space in the structural member in the flat plate shaped member. Therefore, even if the fixing member is not formed separately, the shield plate can be installed in the space in the structural member.

As a result, the shield plate can be easily installed in the space in the structural member.
The vehicle structure is provided with a shield plate comprising a flat plate shaped member and a stress-concentrating portion which is formed over the entire surface of the flat plate shaped member and bends when an external force is applied.
Therefore, the vehicle structure can reliably absorb an impact at the time of a collision.

### EFFECT OF THE INVENTION

The shield plate of the present invention can reliably absorb an impact and can also improve production efficiency.
The vehicle structure of the present invention can reliably absorb an impact at the time of a collision.

### BRIEF DESCRIPTION OF THE DRAWINGS

FIG. 1 is a side view illustrating a shield plate of a first embodiment according to the present invention;
FIG. 2 is a sectional view taken along the line A-A in FIG. 1;
FIG. 3 is a perspective view of a major portion of a vehicle seen from the upper left as an example of a vehicle structure provided with the shield plate shown in FIG. 1;
FIG. 4 is a left side view of the major portion of the vehicle shown in FIG. 3;
FIG. 5 is a perspective view of the major portion seen from the upper left illustrating the case where an external force is applied to the vehicle shown in FIG. 3;
FIG. 6 is an enlarged view of the shield plate on the left side shown in FIG. 5;
FIG. 7 is a perspective view from the upper left illustrating a second embodiment of the present invention;
FIG. 8 is a left side view illustrating a third embodiment of the present invention;
FIG. 9 shows drawings for explaining a method for adhesively bonding an elastic member to the peripheral portion in a fourth embodiment of the present invention,
   (a) showing the step of opening the front end of a fitting portion toward both sides in a thickness direction, and
   (b) showing the step of adhesively bonding the front end of the fitting portion to the peripheral portion;
FIG. 10 shows drawings for explaining a method for adhesively bonding an elastic member to the peripheral portion in a fifth embodiment of the present invention,
   (a) showing the step of abutting an adhesive layer on the inner surface of the elastic member against a peripheral portion of a flat plate shaped member, and
   (b) showing the step of bonding the widthwise end of the elastic member to the left side surface and the right side surface of the flat plate shaped member;

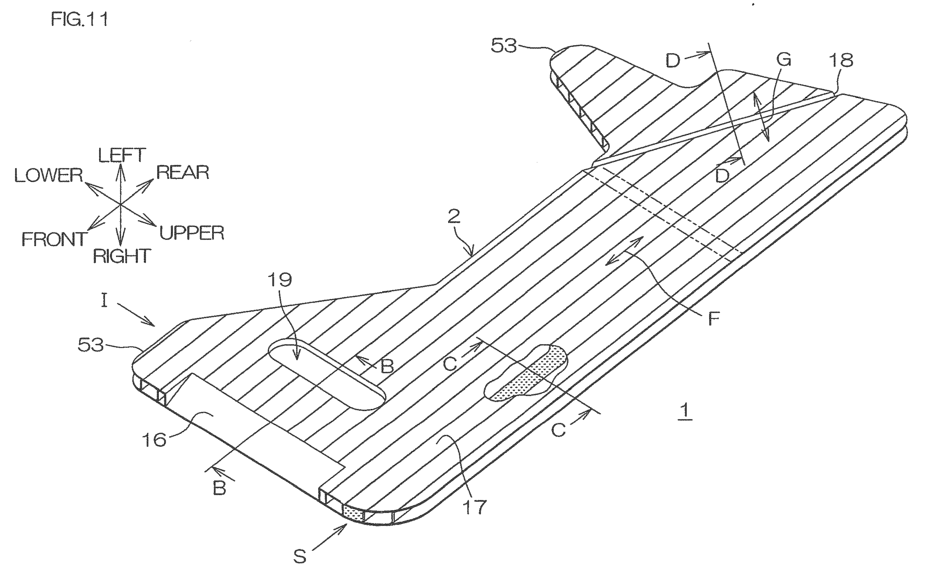

FIG. 11 is a perspective view illustrating a sixth embodiment of the present invention;

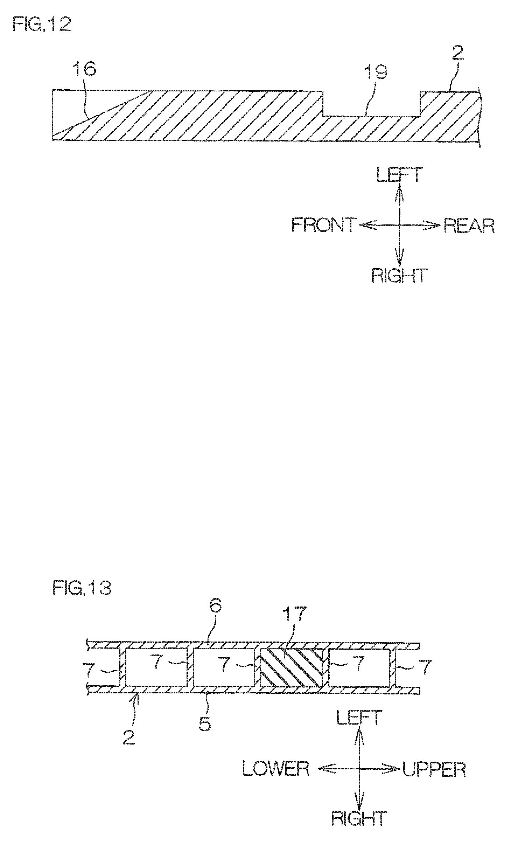

FIG. 12 is a sectional view, taken along the line B-B shown in FIG. 11, illustrating a first recess and a second recess of FIG. 11;
FIG. 13 is a sectional view, taken along the line C-C shown in FIG. 11, illustrating a filling portion of FIG. 11;

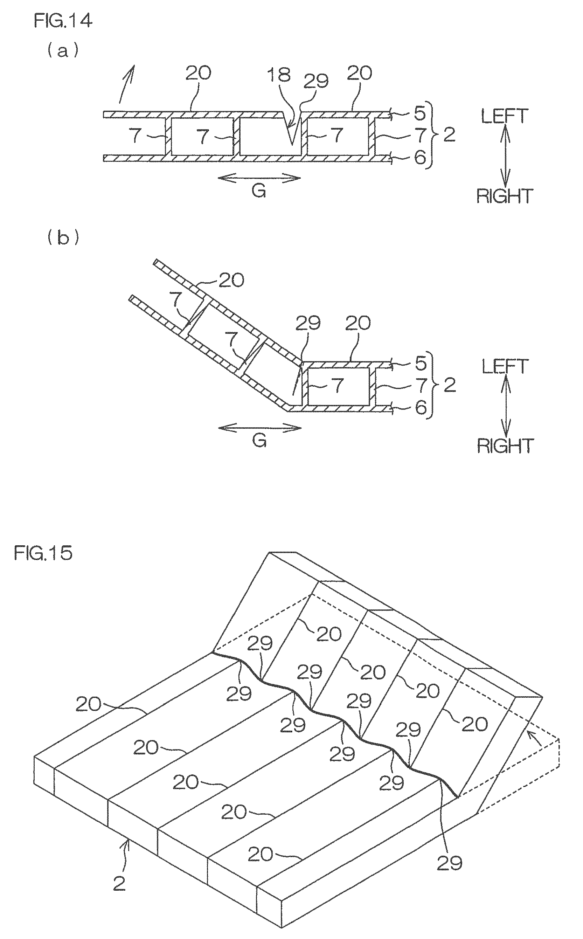

FIG. 14 is a sectional view, taken along the line D-D shown in FIG. 11, illustrating a bending portion of FIG. 11;
FIG. 15 shows a perspective view for explaining bending in the bending portion of FIG. 11;

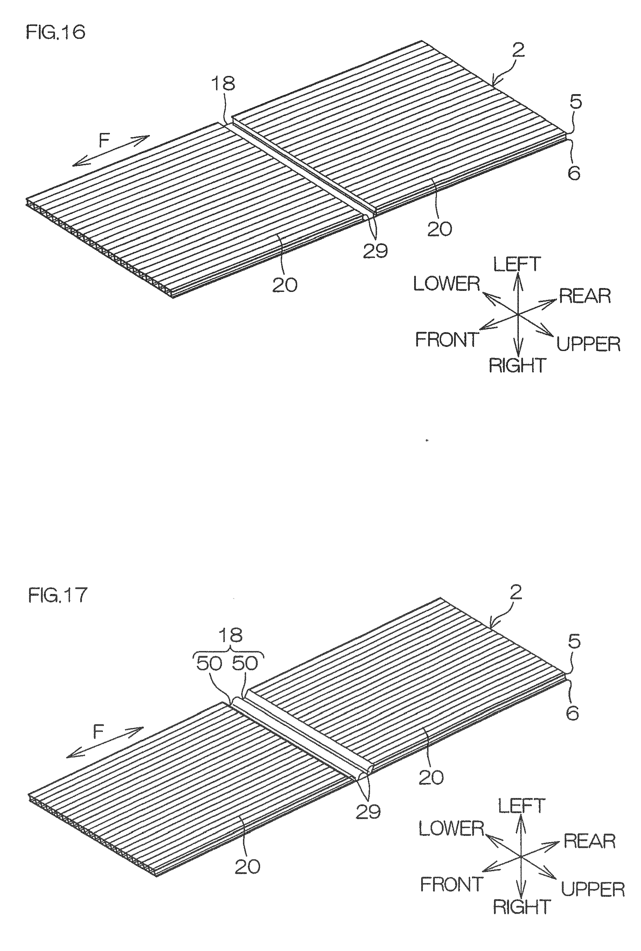

FIG. 16 is a perspective view illustrating the bending portion of a seventh embodiment of the present invention;
FIG. 17 is a perspective view illustrating the bending portion of an eighth embodiment of the present invention;

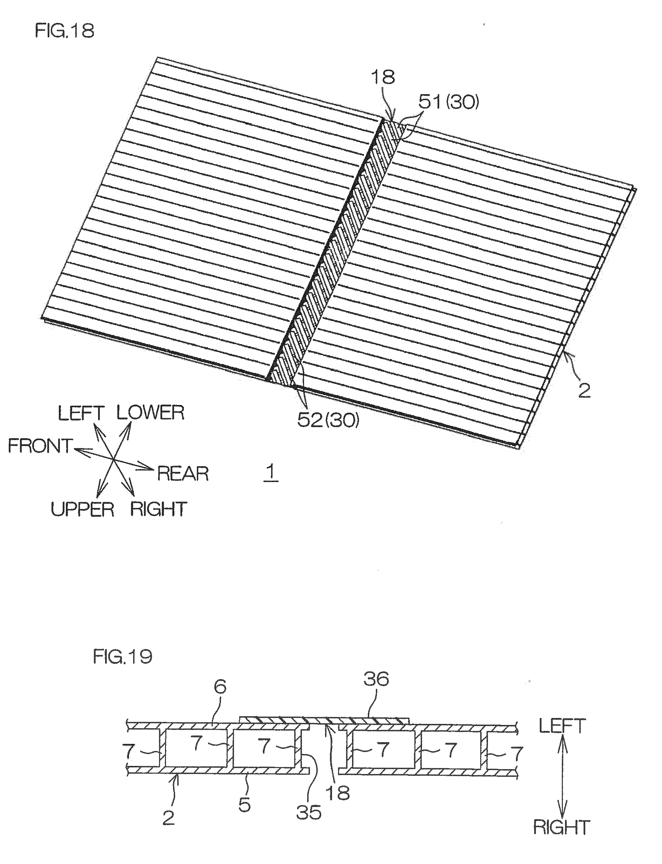

FIG. 18 is a perspective view illustrating the bending portion of a ninth embodiment of the present invention;
FIG. 19 is a perspective view illustrating the bending portion of a tenth embodiment of the present invention;

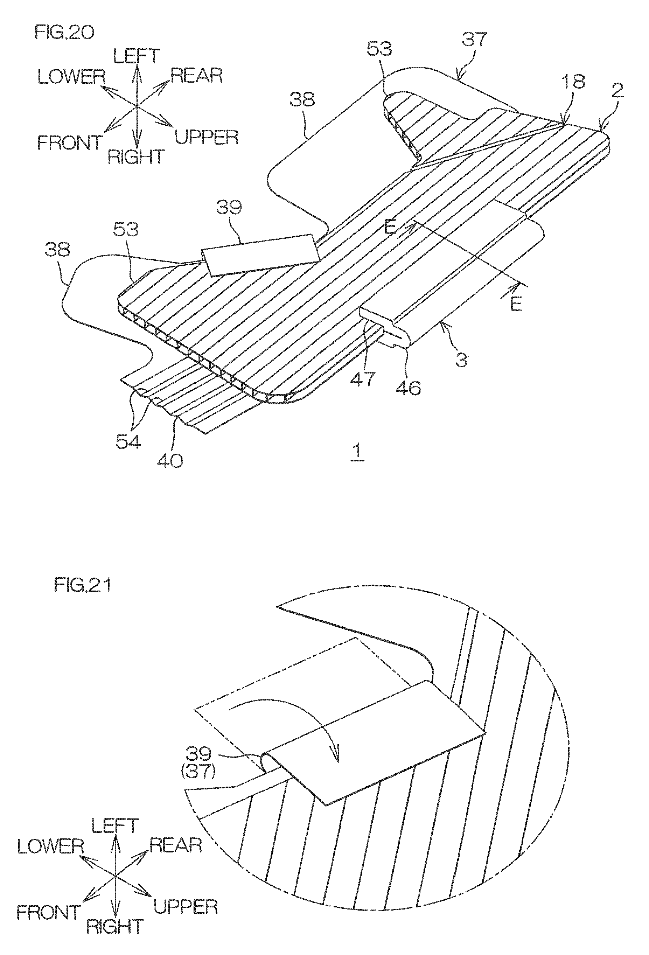

FIG. 20 is a perspective view illustrating an eleventh embodiment of the present invention;
FIG. 21 is an enlarged perspective view illustrating a flexure portion of FIG. 20;

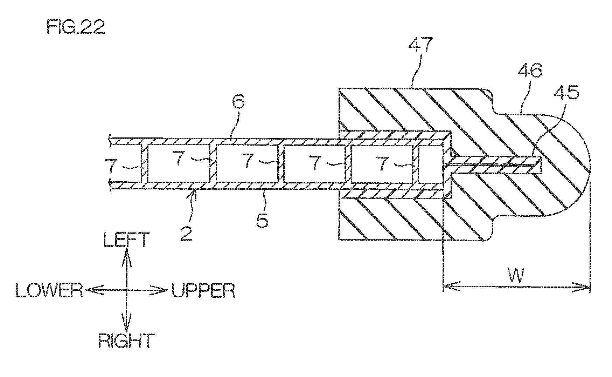

FIG. 22 is an enlarged sectional view, taken along the line E-E shown in FIG. 20, illustrating an elastic member of FIG. 20;

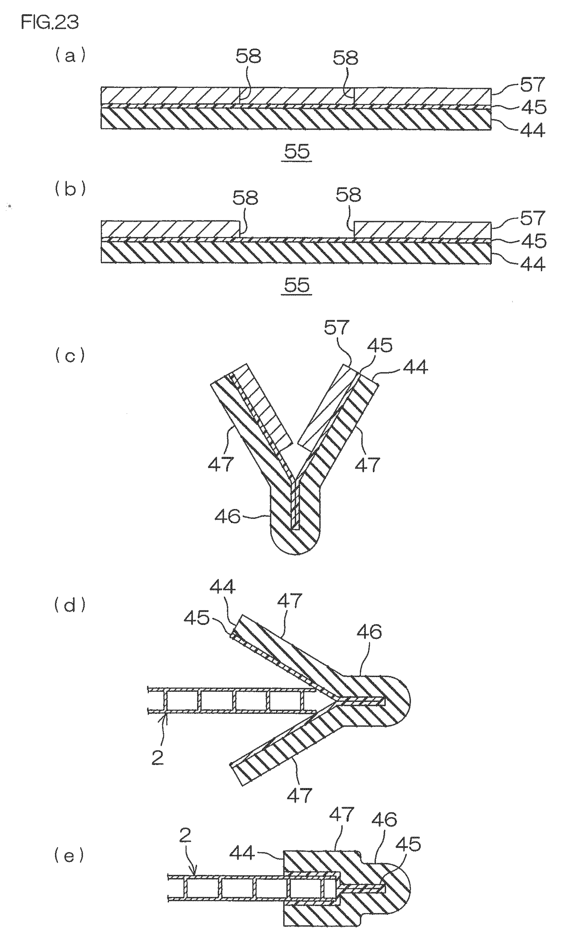

FIG. 23 shows drawings for explaining a method for adhesively bonding an elastic member to the peripheral portion,
   (a) showing the step of preparing an elastic adhesive sheet,
   (b) showing the step of peeling off a release film at the widthwise center,
   (c) showing the step of bonding the widthwise center to each other,
   (d) showing the step of facing the attached portion to the peripheral portion of the flat plate shaped member, and
   (e) showing the step of adhesively bonding the attached portion to the peripheral portion of the flat plate shaped member.

### EMBODIMENT OF THE INVENTION

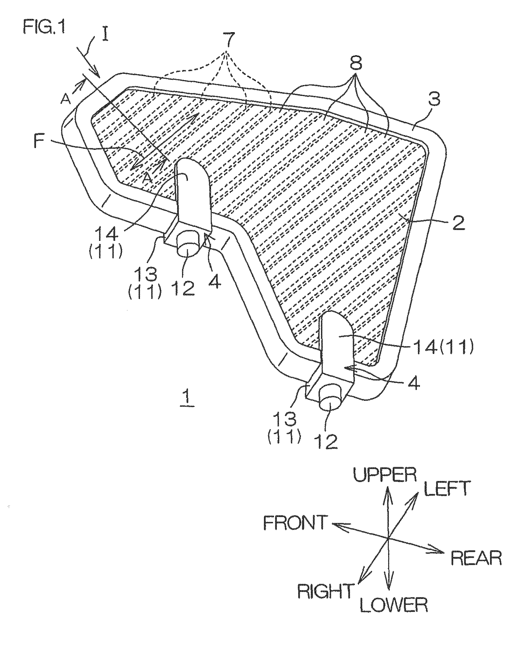

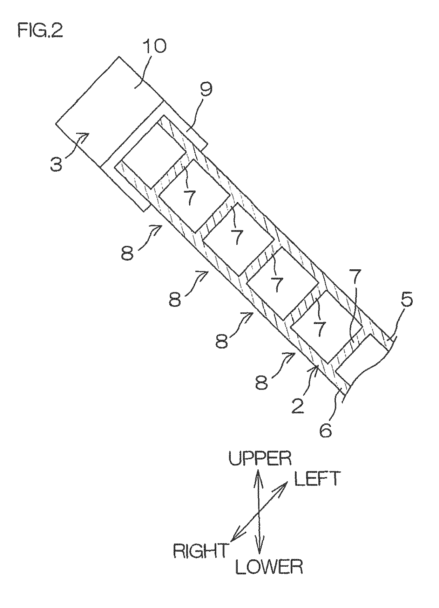

FIG. 1 is a perspective view illustrating a shield plate of a first embodiment according to the present invention and FIG. 2 is a sectional view taken along the line A-A in FIG. 1. The shield plate 1 will be based on the directions when a shield plate 1 is fixed in a vertical direction, specifically, based on the directional arrows shown in the drawings, if the directions are noted.
As shown in FIG. 1, the shield plate 1 includes a flat plate shaped member 2, an elastic member 3 provided around the perimeter of the peripheral portion of the flat plate shaped member 2, and a clip 4 attached to the flat plate shaped member 2 as a fixing member fixable to a space in a structural member.

As shown in FIG. 2, the flat plate shaped member 2 has a ladder-shaped cross-section (a harmonica-shaped cross-section), and integrally includes a left side plate 5 serving as a first flat plate, a right side plate 6 serving as a second flat plate spaced in opposed relation to the left side plate 5 in the left-and-right (horizontal) direction, and a plurality of struts 7 installed between the left side plate 5 and the right side plate 6.
As shown in FIG. 1, the flat plate shaped member 2 is formed in a specified shape corresponding to a cross-sectional shape of the space in the structural member to be described later, for example, with its rear side being formed in a generally rectangular shape in side view extending along an up-and-down direction and its front side being formed in a generally pentagonal shape in side view projecting forward from the upper end portion of its rear side to the center in the up-and-down-direction.

The left side plate 5 and the right side plate 6 are formed in a flat plate shape corresponding to the outer shape of the flat plate shaped member 2.
A plurality of the struts 7 are spaced in parallel to one another in the front-and-rear-direction (a direction orthogonal to the thickness direction of the flat plate shaped member 2) across the entire surface of the flat plate shaped member 2. Each of the struts 7 is formed in a straight line so as to be inclined toward the rear side as it extends upward. Further, as shown in FIG. 2, the struts 7 are formed in a flat plate extending along the left-and-right direction.

In the flat plate shaped member 2, each of the portions between the struts 7 is partitioned as a frangible portion 8 (a stress-concentrating portion) which is more frangible than the portions in which the struts 7 are formed.
Specifically, each of the frangible portions 8 is formed along one direction (shown as a frangible portion formation direction F in FIG. 1) between the struts 7 formed in a straight line, each frangible portion 8 being formed over the entire flat plate shaped member 2 so as to be spaced in a direction orthogonal to the frangible portion formation direction F.

The flat plate shaped member 2 can be formed in the following manner. First, a synthetic resin such as polyethylene, polypropylene, polycarbonate, polyester, polystyrene, or acrylic is integrally molded into a sheet shape having the above-mentioned cross-sectional shape by extrusion molding, and then the molded resin is punched into the above-mentioned shape, so that the flat plate shaped member 2 can be formed. Preferably, the flat plate shaped member 2 is formed from polypropylene and polycarbonate.

The flat plate shaped member 2 can be formed by, for example, punching a commercially available corrugated plastic sheet (Danpla sheet) into the above-mentioned shape.
The area weight of the flat plate shaped member 2 is in the range of, for example, 200 to 2000 g/m², or preferably 300 to 1500g/m². When the area weight of the flat plate shaped member 2 is less than the above range, the strength of the flat plate shaped member 2 becomes disadvantageously too low. On the other hand, when the area weight of the flat plate shaped member 2 is more than the above range, the flat plate shaped member 2 becomes disadvantageously difficult to bend.

The edgewise crush resistance of the flat plate shaped member 2 in a direction in which the frangible portions are parallely-arranged is, for example, 0.02 to 0.9 times, or preferably 0.05 to 0.5 times higher than that in the frangible portion formation direction F. When the edgewise crush resistance of the flat plate shaped member 2 in a direction in which the frangible portions are parallely-arranged is lower than the above range, it may be difficult to maintain the shape of the flat plate shaped member 2. On the other hand, when the edgewise crush resistance of the flat plate shaped member 2 in a direction in which the frangible portions are parallely-arranged is higher than the above range, it may be difficult to bend the flat plate shaped member 2 along an intended direction.

The edgewise crush resistance (endcrash) in the above-mentioned direction is determined in accordance with JIS Z0403-2.
The left side plate 5 and the right side plate 6 are opposed at a spacing of, for example, 0.8 to 10 mm, or preferably 2 to 5 mm, and have a thickness of, for example, 0.1 to 1 mm, or preferably 0.2 to 0.6 mm.

The struts 7 are spaced, for example, 0.8 to 10 mm, or preferably 2 to 5 mm apart in parallel, and have a thickness of, for example, 0.1 to 1 mm, or preferably 0.2 to 0.6 mm. When the struts 7 are positioned at a spacing wider than the above-mentioned spacing to one another, the strength of the flat plate shaped member 2 becomes disadvantageously too low. On the other hand, when the struts 7 are positioned at a spacing narrower than the above-mentioned spacing to one another, the strength of the flat plate shaped member 2 becomes disadvantageously difficult to bend.

As shown in FIG. 2, the elastic member 3 includes a fitting portion 9 which fits over the peripheral portion so as to sandwich the peripheral portion of the flat plate shaped member 2, and an elastic portion 10 positioned on the opposite side of the flat plate shaped member 2 relative to the fitting portion 9.
The fitting portion 9 is formed in a generally flat-bottomed U-shape in cross section opening toward the flat plate shaped member 2 so as to correspond to the peripheral end of the flat plate shaped member 2.

Examples of the fitting portion 9 include adhesive sheets, adhesive films, and hard molded articles formed from synthetic resins such as polyethylene, polypropylene, polyvinyl chloride, polyester, nylon, polyurethane, and epoxy; and adhesive sheets formed from synthetic rubber foam such as ethylene-propylene rubber foam and ethylenepropylenediene rubber foam. Of these, an adhesive sheet formed from synthetic rubber foam is preferable. More preferable is an adhesive sheet formed from ethylenepropylenediene rubber foam.

The elastic portion 10 is formed in a generally rectangular shape in cross section. The elastic portion 10 is formed of synthetic rubber foam such as polyurethane rubber foam, ethylene-propylene rubber foam, and ethylenepropylenediene rubber foam, and is preferably formed from ethylenepropylenediene rubber foam.
The elastic member 3 is formed by bonding the elastic portion 10 to the fitting portion 9 with an adhesive or the like.

The clip 4 is formed from, for example, hard synthetic resin molded article or the like, integrally includes a clamping portion 11 which clamps the flat plate shaped member 2 and the elastic member 3 from the left-and-right direction, and a fixing portion 12 for fixing the clip 4 in the space in the structural member as shown in FIG. 1, and is positioned one in each lower position on the front and rear sides of the flat plate shaped member 2.
The clamping portion 11 integrally includes a bottom 13 having a generally rectangular shape in plan view and two clamping pieces 14 extending upward from both edges of the bottom in the left-and-right direction. The bottom 13 has a length in the left-and-right direction of 2 to 18 mm, or preferably 4 to 12 mm. The bottom 13 has a thickness in the range of, for example, 0.5 to 5 mm, or preferably 1 to 3 mm, and the clamping piece 14 has a thickness in the range of, for example, 0.5 to 3 mm, or preferably 1 to 2 mm.

The fixing portion 12 is formed in a generally cylindrical shape so as to protrude downward from the lower end face of the bottom 13. Further, the radial length of the fixing portion 12 is formed shorter than both the front-and-rear-direction length and the left-and-right direction length of the bottom 13.
For production of the shield plate 1, the fitting portion 9 of the elastic member 3 is first folded so as to clamp the peripheral portion of the flat plate shaped member 2 formed in a specified shape and then adhesively bonded. Subsequently, the flat plate shaped member 2 and the elastic member 3 are inserted into the clamping piece 14 of the clip 4 until they abut against the bottom 13. Therefore, the shield plate 1 is obtained.

The shield plate 1 thus obtained is used for a partition of the space of the structural member. Examples of the structural member include cowl members for vehicles.
The method of using the shield plate 1 shown in FIG. 1 will now be described by reference to the following example applied to a cowl portion 24 of a vehicle 21 as an example of vehicle structure.

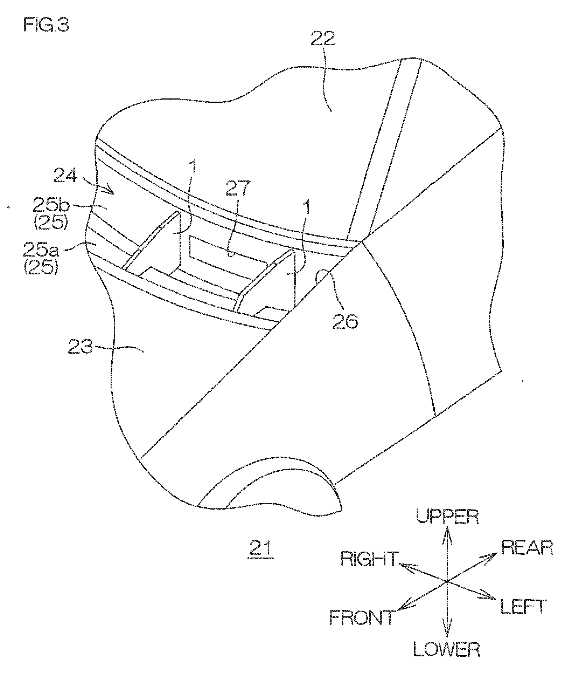

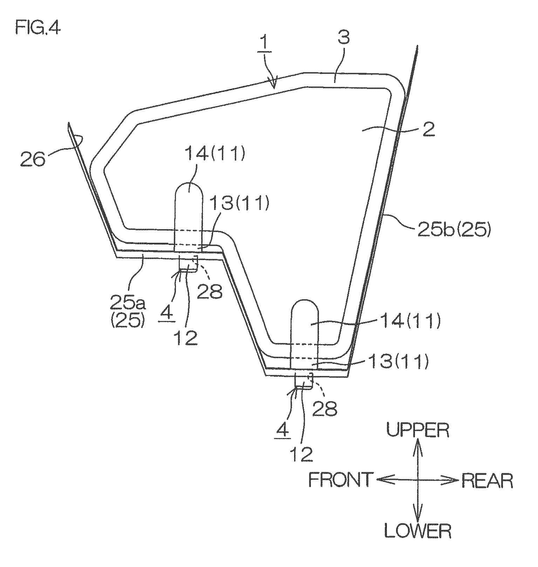

FIG. 3 is a perspective view of a major portion of a cowl portion of a vehicle seen from the upper left as an example of a vehicle structure provided with the shield plate shown in FIG. 1; and FIG. 4 is a left side view of the major portion of the vehicle shown in FIG. 3. In FIG. 3, for convenience, the inner portion of the cowl portion 24 is directly illustrated, and the elastic member 3 of the shield plate 1 is omitted.

As shown in FIG. 3, the vehicle 21 includes a windshield 22, an engine hood 23, and the cowl portion 24 provided between the windshield 22 and the engine hood 23.
The cowl portion 24 is positioned along the left-and-right direction of the vehicle 21 and is provided with a cowl flame 25 having a structure recessed downward. The cowl flame 25 integrally includes an engine room-side groove 25a formed on the front side, and a vehicle compartment-side groove 25b communicated to the rear side of the engine room-side groove 25a and more deeply formed. A cowl space 26 as an example of the space in the structural member is partitioned with the engine room-side groove 25a and the vehicle compartment-side groove 25b. An ambient air inlet port 27 for introducing ambient air into the vehicle compartment is formed in the rear wall of the vehicle compartment-side groove 25b. As shown in FIG. 4, in the bottom wall of the engine room-side groove 25a and the vehicle compartment-side groove 25b, a fixing portion insert hole 28 is formed in a position corresponding to each of the clips 4 positioned on the front and rear sides of the shield plate 1.

As shown in FIG. 3, the shield plate 1 is positioned in the cowl space 26 so as to be positioned on both outsides of the ambient air inlet port 27 in the left-and-right direction.
For positioning of the shield plate 1 in the cowl space 26, as shown in FIG. 4, the fixing portion 12 of the clip 4 on the front side and the fixing portion 12 of the clip 4 on the rear side are inserted through the fixing portion insert hole 28 of the engine room-side groove 25a and the fixing portion insert hole 28 of the engine room-side groove 25b, respectively, from above until the lower end face of the bottom 13 abuts against the bottom surface of the cowl flame 25, so that the elastic member 3 is fixed to be firmly stuck to the inner peripheral surface of the cowl flame 25.

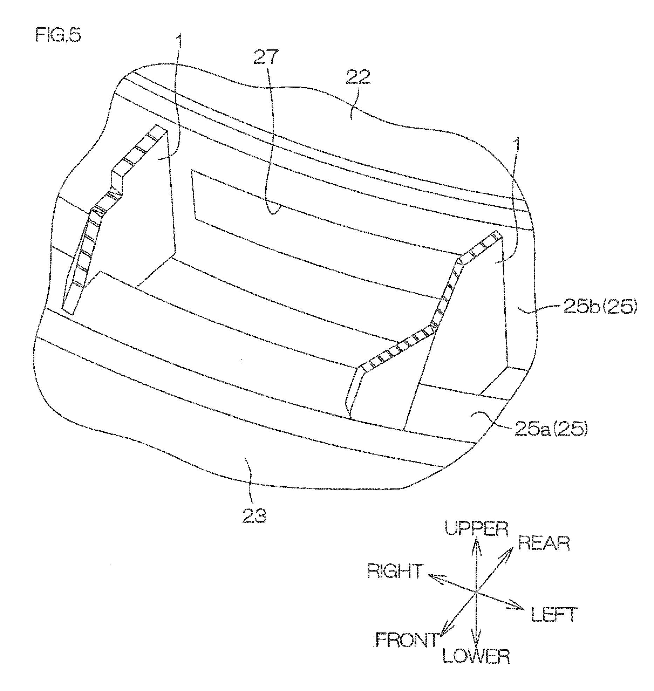

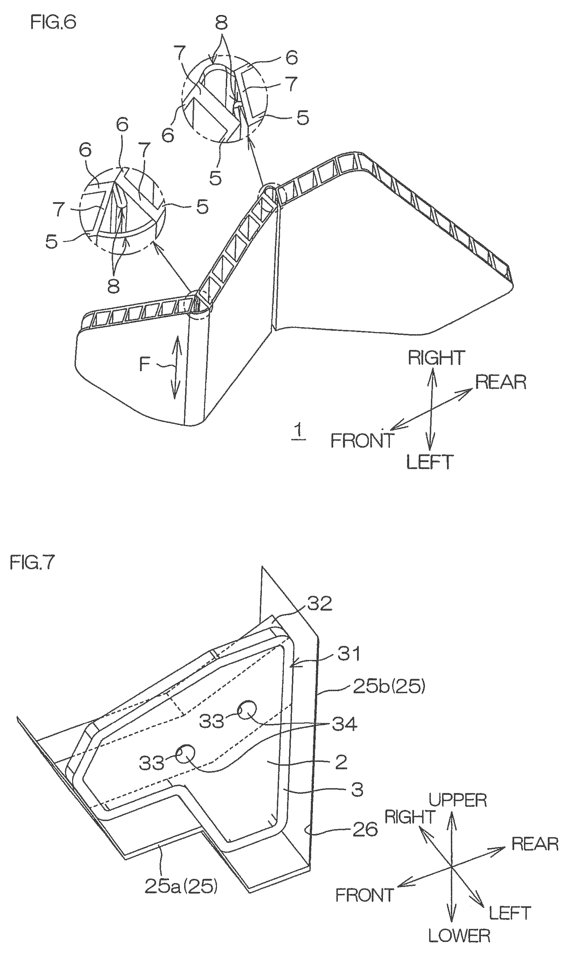

Thus, in the cowl space 26, portion in which the ambient air inlet port 27 is formed is shielded, so that hot air or odor from the engine room can be prevented from flowing into the vehicle compartment through the ambient air inlet port 27.
An action of the shield plate 1 at the time of applying an impact force I as an external force to the vehicle 21 will be described below with reference to FIGS. 5 and 6. The direction (the direction indicated by the arrow in FIG. 1) in which the impact force I is applied is assumed, for example, in the case where the vehicle 21 collides head-on and the collided object hits onto the engine hood 23 and the cowl portion 24 of the vehicle 21.

FIG. 5 is a perspective view of the major portion seen from the upper left illustrating the case where an external force is applied to the vehicle shown in FIG. 3; and FIG. 6 is an enlarged view of the shield plate on the left side shown in FIG. 5.
As shown in FIG. 5, the shield plate 1 bends when the impact force I is applied to the vehicle 21.

In particular, the impact force I is first applied from a direction nearly orthogonal to the frangible portion formation direction F, that is, from obliquely forward above (see FIG. 1.).
In response to the impact force I, a stress is generated in the flat plate shaped member 2, and the stress thus generated is concentrated on any site of the flat plate shaped member 2 depending on how the impact force I is applied (amount of the impact force, direction, site to be applied, etc.).
Since the frangible portions 8 are formed over the entire flat plate shaped member 2, the flat plate shaped member 2 bends in the frangible section 8 on which particularly a stress concentrates when either the left side plate 5 or the right side plate 6 bends in the left-and-right direction, as shown in FIG. 6.

In particular, the flat plate shaped member 2 bends at two frangible portions 8 including at the frangible portion 8 on the front side where it bends along the frangible portion formation direction F so that the right side plate 6 between the struts 7 projects toward the left side, and at the frangible portion 8 on the rear side where it bends along the frangible portion formation direction F so that the left side plate 5 between the struts 7 projects toward the right side.
Thus, the application of the impact force I causes the flat plate shaped member 2 to bend at the frangible portion 8 corresponding to the impact force I, thereby allowing the impact force I to be absorbed.

According to the shield plate 1, the frangible portion 8 that bend when the impact force I is applied is formed over the entire flat plate shaped member 2, so that even if the impact force I is applied to any site of the flat plate shaped member 2, the flat plate shaped member 2 can bend at the frangible portion 8. Besides, since the frangible portions 8 are provided over the entire flat plate shaped member 2, any shape of the flat plate shaped member 2 allows the impact force I to act on the frangible portions 8.

As a result, the shield plate 1 can reliably absorb the impact force I and also improve production efficiency.
According to the shield plate 1, the flat plate shaped member 2 is formed from the left side plate 5, the right side plate 6, and the struts 7, and the frangible portions 8 are formed between the struts 7, so that the strength of the shield plate 1 can be maintained in the struts 7, and the flat plate shaped member 2 can also reliably bend at the frangible portions 8 between the struts 7.

In the shield plate 1, the frangible portions 8 are formed along the frangible portion formation direction F. Therefore, the flat plate shaped member 2 can be reliably bent at a site to which the impact force I is applied, along the frangible portion formation direction F.
As a result, the shield plate 1 can more reliably absorb the impact force I.
In the shield plate 1, a plurality of frangible portions 8 are parallely-arranged at spaced intervals in a direction orthogonal to the frangible portion formation direction F. Therefore, regardless of the sites to which the impact force I is applied, the flat plate shaped member 2 can be bent in the direction orthogonal to the frangible portion formation direction F.

As a result, the shield plate 1 can more reliably absorb the impact force I.
The edgewise crush resistance of the shield plate 1 in a direction in which the frangible portions 8 are parallely-arranged is, for example, 0.02 to 0.9 times higher than that in the frangible portion formation direction F. In other words, the edgewise crush resistance of the shield plate 1 in the direction in which the frangible portions 8 are parallely-arranged is set lower than that in the frangible portion formation direction F. Therefore, for example, in the case where the vehicle 21 collides head-on and the collided object hits onto the engine hood 23 and the cowl portion 24 of the vehicle 21, the impact force I is applied from the direction in which the frangible portions 8 are parallely-arranged, which in turn the flat plate shaped member 2 can easily bend.

As a result, the shield plate 1 can more reliably absorb the impact force I applied from the direction in which the frangible portions 8 are parallely-arranged.
In the shield plate 1, the elastic member 3 is positioned around the perimeter of the peripheral portion of the flat plate shaped member 2. Therefore, when the shield plate 1 is attached to the cowl space 26, the elastic member 3 deforms into the shape of the cowl space 26 to firmly stick to the cowl flame 25.

As a result, the shielding effect can be improved by firmly sticking the shield plate 1 to the cowl flame 25 with simple construction.
In the shield plate 1, the elastic member 3 includes a fitting portion 9 which fits over the peripheral portion so as to sandwich the peripheral portion of the flat plate shaped member 2 and an elastic portion 10 positioned on the opposite side of the flat plate shaped member 2 relative to the fitting portion 9.

Therefore, the elastic member 3 can be reliably fixed to the flat plate shaped member 2 by sandwiching the peripheral portion of the flat plate shaped member 2 with the fitting portion 9, and when the shield plate 1 is attached to the cowl space 26, the elastic portion 10 can be reliably firmly stuck to the cowl flame 25.
The shield plate 1 is provided with the clip 4 fixable to the cowl space 26 at the flat plate shaped member 2. Therefore, even if the clip 4 is not formed separately, the shield plate 1 can be installed in the cowl space 26.

As a result, the shield plate 1 can be easily installed in the cowl space 26.
Since the vehicle 21 is provided with the shield plate 1, the impact force I at the time of a collision can be reliably absorbed.

### (Variations)

FIG. 7 is a perspective view seen from the upper left illustrating a second embodiment of the present invention. The same reference numerals are used in FIG. 7 for the same members as the first embodiment, and the description thereof is omitted.

In the above-mentioned first embodiment, the shield plate 1 is provided with the clip 4 fixable to the cowl space 26. However, for example, as shown in FIG. 7, in the case where the cowl flame 25 is provided with a crosslinking plate 32 installed between the front wall and rear wall thereof, and a first projection 34 having a cylindrical shape is formed on the crosslinking plate 32, the cowl frame 25 does not necessarily have the clip 4.
In such case, the crosslinking plate 32 has two first projections 34 formed in spaced relation in the front-and-rear-direction.

A shield plate 31 includes a flat plate shaped member 2 and an elastic member 3. In addition, the shield plate 31 has two through holes 33 formed near the center of the flat plate shaped member 2, in the positioning corresponding to the first projecting portion 34.
The shield plate 31 is attached by, for example, inserting the first projecting portion 34 through the penetration hole 33 toward the left side and fixing it to the crosslinking plate 32 on the right side.

The shield plate 31 has the same operations and effects as the shield plate 1 of the first embodiment. Besides, since the shield plate 31 does not require the clip 4, production efficiency can be further improved.

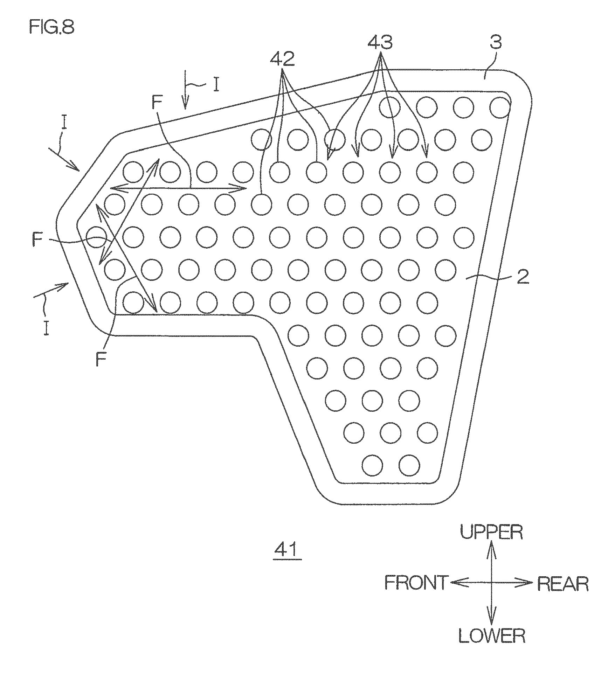

FIG. 8 is a left side view illustrating a third embodiment of the present invention. The same reference numerals are used in FIG. 8 for the same members as the first embodiment, and the description thereof is omitted.

In the above-mentioned first embodiment, the shield plate 1 includes the struts 7 formed in a straight line positioned in parallel at spaced intervals to one another. However, as shown in FIG. 8, the shield plate 1 may include the struts 42 having, for example, a generally cylindrical shape in side view placed in staggered arrangement.
Portions between the struts 42 are partitioned as frangible portions 43 which are more frangible than portions in which the struts 42 are formed.

Specifically, the frangible portions 43 are formed between the struts 42 positioned in staggered form along three frangible portion formation directions F including a front-and-rear-direction, a direction in which the frangible portions 43 are inclined toward the rear side as they extend upward, and a direction in which the frangible portions 43 are inclined toward the front side as they extend upward. The frangible portion formation directions F intersect one another at an angle of 60 degrees.
The shield plate 41 has the same operations and effects as the shield plate 1 of the first embodiment. Besides, in the shield plate 41, the frangible portions 43 are formed along three frangible portion formation directions F and are parallely-arranged at spaced intervals in each direction orthogonal to the each of respective frangible portion formation directions F. Therefore, regardless of the sites to which the impact force I is applied, the flat plate shaped member 2 can be bent in any direction.

As a result, the shield plate 41 can more reliably absorb the impact force I.

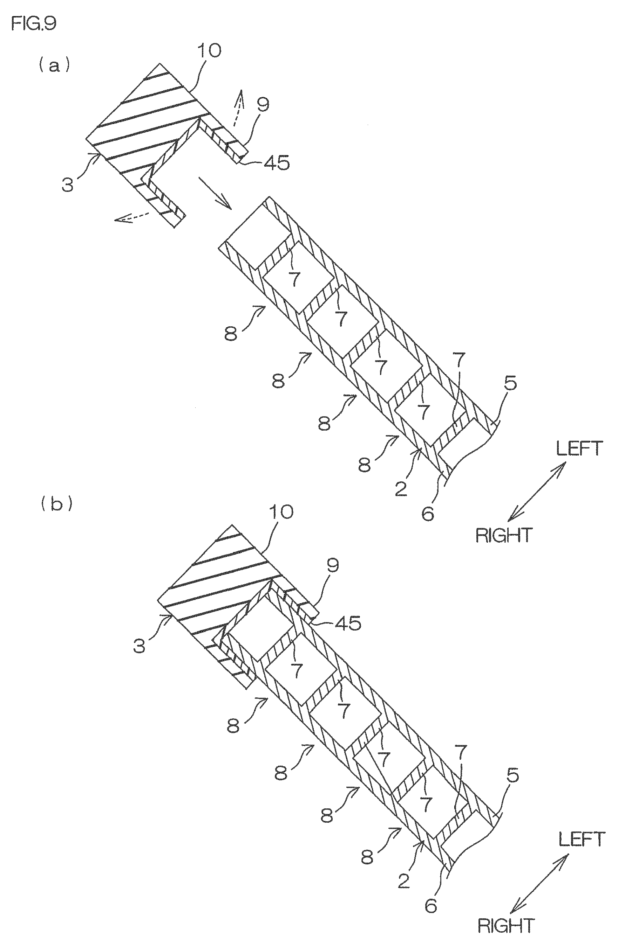

FIG. 9 shows drawings for explaining a method for adhesively bonding an elastic member to the peripheral portion in a fourth embodiment of the present invention. The same reference numerals are used in each of the subsequent figures for the same members as those in the above-mentioned embodiments, and the description thereof is omitted.
In the above-mentioned description of FIG. 2, the elastic member 3 is formed from separate members of the fitting portion 9 and the elastic portion 10. However, as shown in FIG. 9(b), the elastic member 3 may be formed, for example, from one member of an elastic layer 44.

That is, the elastic layer 44 is formed from a foam used for forming the above-mentioned elastic portion 10, and is integrally formed from the elastic portion 10 having a generally rectangular shape in cross section serving as a base portion, and a fitting portion 9 having a generally flat-bottomed U-shape in cross section serving as a play portion.
An adhesive layer 45 composed of known adhesives is laminated on the inner surface of the fitting portion 9.
The elastic member 3 is adhesively bonded to the peripheral portion of the flat plate shaped member 2 in the following manner. First, as indicated by dashed arrows in FIG. 9(a), the front ends of the fitting portion 9 are opened toward both sides in the thickness direction of the flat plate shaped member 2. Subsequently, as indicated by the arrows in FIG. 9(a) and shown in FIG. 9(b), after the fitting portion 9 is inserted into the flat plate shaped member 2, the inner surface of the fitting portion 9 is adhesively bonded to the peripheral portion of the flat plate shaped member 2 via the adhesive layer 45.

According to this method, since the elastic member 3 is integrally formed from one elastic layer 44, the construction of the elastic member 3 can be simplified.

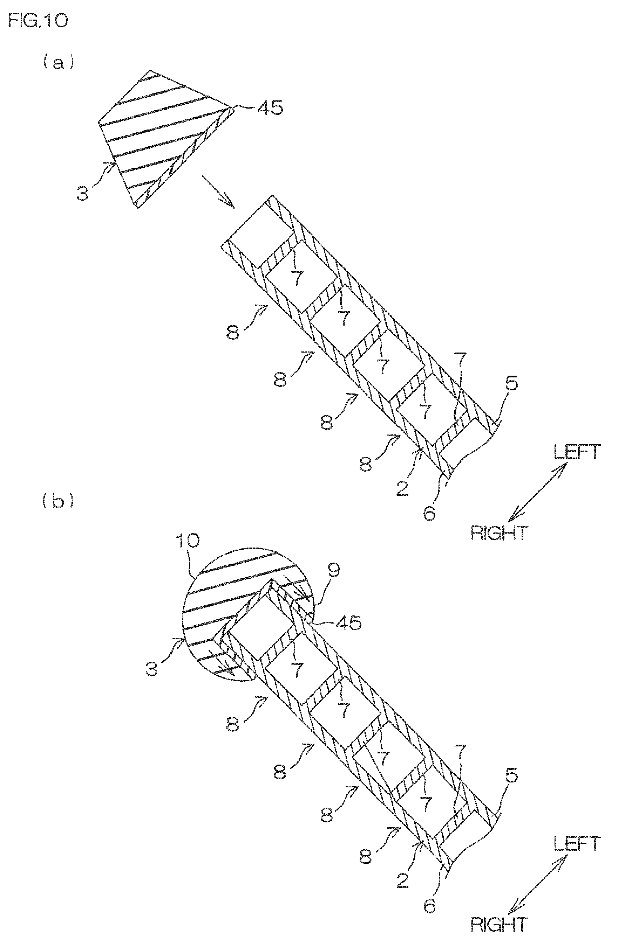

FIG. 10 shows drawings for explaining a method for adhesively bonding an elastic member to the peripheral portion in a fifth embodiment of the present invention.
In the above description, the elastic portion 10 and the fitting portion 9 are formed in a generally rectangular shape and a generally flat-bottomed U-shape in cross section, respectively. However, as shown in FIG. 10(a), the elastic member 3 may be formed, for example, in a trapezoidal shape in cross section.

The elastic member 3 is formed in a generally trapezoidal shape in cross section gradually narrowing in width (a length in the thickness direction of the flat plate shaped member 2) as it extends toward the outside (outside of the peripheral portion).
The elastic member 3 is adhesively bonded to the peripheral portion of the flat plate shaped member 2 in the following manner. First, as indicated by the arrow in FIG. 10(a), the adhesive layer 45 on the inner surface (a face opposed to the peripheral portion) of the elastic member 3 is brought into contact with the peripheral portion of the flat plate shaped member 2. This allows the widthwise center of the inner surface of the elastic member 3 to be bonded to the end face of the peripheral portion of the flat plate shaped member 2 with the adhesive layer 45.

Subsequently, as shown in FIG. 10(b), both widthwise ends of the elastic member 3 are bonded to both the left side surface and the right side surface of the peripheral portion of the flat plate shaped member 2 via the adhesive layer 45. Specifically, as indicated by the arrows in FIG. 10(b), both the widthwise end portions of the elastic member 3 are bonded to both surfaces of the peripheral portion of the flat plate shaped member 2 via the adhesive layer 45 while being pulled inwardly toward the flat plate shaped member 2.
The elastic member 3 is then formed in a generally circular shape (a curved shape expanding outward) in cross section by pulling both the widthwise end portions described above, so that the elastic section 10 positioned outside the peripheral portion and the fitting portion 9 positioned on both sides of the peripheral portion are formed.

Since the elastic member 3 is formed in a generally circular shape (a curved shape) in cross section after adhesively bonded to the peripheral portion, peeling resulting from contact with the cowl portion 24 can be effectively prevented at the time of the positioning to the cowl portion 24, as compared with the elastic member 3 having a generally rectangular shape shown in FIG. 9. Therefore, adhesion between the elastic member 3 and the peripheral portion of the flat plate shaped member 2 can be enhanced. As a result, the shielding effect of the shield plate 1 using the elastic member 3 can be further improved.

FIG. 11 is a perspective view illustrating a sixth embodiment of the present invention, FIG. 12 is a sectional view, taken along the line B-B shown in FIG. 11, illustrating the recesses of FIG. 11, FIG. 13 is a sectional view, taken along the line C-C shown in FIG. 11, illustrating a filling portion of FIG. 11, FIG. 14 is a sectional view, taken along the line D-D shown in FIG. 11, illustrating a bending portion of FIG. 11, and FIG. 15 shows a perspective view for explaining bending in the bending portion of FIG. 11. The shield plate 1 shown in FIG. 11 is applied with a proper posture corresponding to the shape of the cowl in the vehicle structure, and will be described based on the direction arrows shown in FIG. 11 in each of the subsequent figures, for convenience.

In FIG. 11, the shield plate 1 has a ladder shape in cross section (cross section in the direction orthogonal to the front-and-rear-direction), and includes a flat plate shaped member 2 having a generally rectangular flat band in the front-and-rear-direction, provided with a second projection 53 of which the lower end portions of the front and rear end portions project toward the lower side.
The flat plate shaped member 2 includes a first recess 16, a second recess 19, and a filling portion 17 as reinforcing portions, and a bending portion 18.

The first recess 16 is partially formed in the flat plate shaped member 2, and specifically provided in the front end face of the flat plate shaped member 2 and formed so that the left-side front end edge is compressed in an inclined form. Specifically, as shown in FIGS. 11 and 12, the first recess 16 is formed in an inclined shape (a triangular shape in cross section) in which the left side surface is close to the right side surface as extends toward the front.
The first recess 16 can be formed by, for example, hot pressing the front end surface of the flat plate shaped member 2 from the upper side.

The second recess 19 is partially formed in the flat plate shaped member 2, and specifically provided in the front end portion of the flat plate shaped member 2, spaced apart in the rear of the first recess 16, and formed so as to extend along the up-and-down direction (the direction orthogonal to the frangible portion formation direction F). The second recess 19 is formed so that the left side portion of the flat plate shaped member 2 is compressed toward the right side (partway in the thickness direction). Specifically, the second recess 19 is formed so as to be recessed in a generally rectangular shape in cross section.

The second recess 19 can be formed by, for example, hot pressing the left side of the flat plate shaped member 2 from the left side.
The filling portion 17 is partially formed in the flat plate shaped member 2, as shown in FIGS. 11 and 13, and specifically, positioned in the upper portion of the flat plate shaped member 2, and is formed in the flat plate shaped member 2 over the front-and-rear-direction. The filling portion 17 is formed by filling a space (filling space) partitioned with one pair of struts 7 opposed to each other, the left side plate 5 and the right side plate 6 installed therebetween, with a filler. Examples of the filler that is used for forming the filling portion 17 include the same materials as the above-mentioned synthetic resin that forms the flat plate shaped member 2, and/or the above-mentioned synthetic rubber foam.

The filling portion 17 can be formed by pouring the above-mentioned synthetic resin into the above-mentioned filling space from the front end and/or the rear end thereof.
The bending portion 18 is partially formed in the flat plate shaped member 2, as shown in FIGS. 11 and 14(a), and specifically, provided in the rear end portion of the flat plate shaped member 2, and formed extending in an inclined form relative to the frangible portion formation direction F. That is, the bending portion 18 is formed in a straight line in side view from the rear end face to the lower end face, and inclined toward the lower side as it extends frontward. The bending portion 18 is formed so that the left side portion (the left side plate 5 and the struts 7 indicated by dashed lines in FIG. 14) of the flat plate shaped member 2 is compressed rightward (partway in the thickness direction). Specifically, the bending portion 18 is formed so as to be recessed in a generally triangular shape in cross section.

Therefore, as referred to the arrow in FIG. 14(b), the bending portion 18 is formed bendable along the above-mentioned inclined direction (a direction in which the bending portion 18 extends).
The bending portion 18 can be formed by, for example, pressing the left side of the flat plate shaped member 2 from the left side.
Different from the frangible portion 8 bent by applying the above-mentioned impact force I thereto, the bending portion 18 is formed as a portion which bends when an external force (stress) is applied by an operator as described later.

With the shield plate 1, when the impact force I is applied to the front end portion of the flat plate shaped member 2 along the frangible portion formation direction F, the flat plate shaped member 2 is about to bend. At this time, the first recess 16 and the second recess 19 can reinforce themselves and the vicinity thereof.
Therefore, the strength of such site can be increased.
As a result, the flat plate shaped member 2 can absorb the impact force I with maintaining its specified shape.

In addition, even if a stress S along the frangible portion formation direction F is applied to the upper side of the flat plate shaped member 2, the filling portion 17 can reinforce the left side plate 5, the right side plate 6, and the struts 7 which are adjacent to the filling portion 17.
Therefore, the strength of such site can be increased.
As a result, the flat plate shaped member 2 can absorb the impact force I by bending with maintaining its specified shape.

In the case where the cowl portion 24 (see FIG. 3) is formed in a complex shape, an operator bends the bending portion 18 as shown in FIG. 14, thereby allowing the shield plate 1 to be reliably positioned in the cowl portion 24.
In particular, when there is a narrow space preceding a place for positioning the shield plate 1, the flat plate shaped member 2 is folded by bending the bending portion 18 and is let pass through the narrow space in such folded state. Thereafter, the bending portion 18 is extended again, so that the flat plate shaped member 2 is finally placed in an unfolded state.

In the above description, the bending portion 18 is formed in a shape inclined to the frangible portion formation direction F. However, for example, as indicated by phantom lines in FIG. 11, it can be formed in a shape orthogonal to the frangible portion formation direction F.
As indicated by solid lines in FIG. 11, the bending portion 18 is preferably formed in a shape inclined to the frangible portion formation direction F.

When the bending portion 18 is formed in the shape orthogonal to the frangible portion formation direction F, end portions 29 facing the bending portion 18 in the installation portions 20 which continuously erect on the struts 7 in the left side plate 5, are opposed to each other in the frangible portion formation direction F, as referred to FIG. 14(a). Therefore, at the time of bending of the bending portion 18, the end portions 29 come into contact with each other, which may limit the movable range of the bending portion 18, or such contact can cause the right side plate 6 of the bending portion 18 to be pulled, which may result in damage of the right side plate 6.

On the other hand, when the bending portion 18 is formed in a shape inclined to the frangible portion formation direction F, the end portions 29 facing to the bending portions 18 of the installation portions 20 are not opposed to one another but positioned in a staggered form in the direction G orthogonal to the direction along the bending portions 18 as shown in FIG. 15. This can prevent the end portions 29 of the installation portions 20 from touching one another at the time of bending of the bending portion 18 and can also cause the end portions 29 on both sides of the bending portion 18 to approach in the staggered form (see FIG. 14 (b)), allowing the bending portion 18 to bend flexibly. In addition, damage (specifically, crack, etc.) to the right side plate 6 of the bending portion 18 described above can be prevented.

FIG. 16 is a perspective view illustrating the bending portion of a seventh embodiment of the present invention, FIG. 17 is a perspective view illustrating the bending portion of an eighth embodiment of the present invention, FIG. 18 is a perspective view illustrating the bending portion of a ninth embodiment of the present invention, and FIG. 19 is a perspective view illustrating the bending portion of a tenth embodiment of the present invention.
In the above description, the bending portion 18 is formed so as to be notched in a triangular shape in cross section. However, the shape is not limited and, for example, as shown in FIGS. 16 to 19, the bending portion 18 may be formed in a generally rectangular shape (FIGS. 16, 18, and 19) in cross section and in a generally W shape in cross section (FIG. 17) so as to be recessed.

In FIG. 16, the bending portion 18 is formed in a straight line extending orthogonally to the frangible portion formation direction F. The width (the front-and-rear-direction length) of the bending portion 18 is set longer than an acceptable level of length which does not cause any contact between the end portions 29 of the installation portion 20 described above at the time of bending, i.e., the spacing between the left side plate 5 and the right side plate 6 both described above.
The bending portion 18 is formed bendable along the up-and-down direction.

The bending portion 18 can be formed by, for example, hot pressing the left side portion of the flat plate shaped member 2 from the left side.
Thus, the bending portion 18 can flexibly bend.
Therefore, when any flow of a liquid (specifically, rain water and/or a cleaning liquid, etc.) and/or solid foreign matters which flow together with the liquid occur in the cowl space 26 (see FIG. 3) of the cowl portion 24, pressure resulting from such flow can bend the flat plate shaped member 2, allowing the liquid and/or the foreign matters flowing into the cowl space 26 (see FIG. 3) in the cowl portion 24 of the vehicle 21 to pass through.

In FIG. 17, the bending portion 18 is partitioned with two compressed portions 50 having a generally triangular shape.
Such bending portion 18 can more flexibly bend with these two compressed portions 50. Therefore, the liquid and/or the foreign matters flowing into the cowl space 26 (see FIG. 3) in the cowl portion 24 of the vehicle 21 as described above can be more reliably passed through.

In FIG. 18, a single-cut line 30 inclined along the up-and-down direction is formed on the left side surface and the right side surface of the bending portion 18. Specifically, of the single-cut line 30, a left single-cut line 51 formed in the left side surface of the bending portion 18 and a right single-cut line 52 formed in the right side surface of the bending portion 18 are projected to the left side and the right side, respectively, and a plurality of these folds are spaced apart from one another in the up-and-down direction.
The left single-cut line 51 and the right single-cut line 52 are orthogonal to each other when projected in the left-and-right direction (thickness direction). More specifically, the left single-cut line 51 inclines rearward as it extends upward while the right single-cut line 52 inclines forward as it extends upward.

These single-cut lines 30 are formed by hot pressing in the left-and-right direction, specifically, by simultaneously applying heat and pressure from the left-and-right direction using a heat press having two dies corresponding to the left single-cut line 51 and the right single-cut line 52.
In the shield plate 1, the single-cut line 30 can increase flexibility of the bending portion 18. Therefore, the liquid and/or the foreign matters flowing into the cowl space 26 (see FIG. 3) in the cowl portion 24 of the vehicle 21 as described above can be reliably passed through.

Since the left single-cut line 51 and the right single-cut line 52 of the bending portion 18 are orthogonal to each other when projected in the left-and-right direction, mechanical durability of the bending portion 18 can be improved.
In the description of FIG. 18, the bending portion 18 is formed over the entire up-and-down direction of the flat plate shaped member 2. However, it may be formed, for example, in its end portion in the up-and-down-direction or partway in such direction.
In FIG. 19, the flat plate shaped member 2 has a slit 35 formed dividing it into two portions, and the bending portion 18 is formed with a first flexible sheet 36 which is installed on the left side surface of the flat plate shaped member 2 on both sides of the slit 35.

The first flexible sheet 36 is formed from, for example, the above-mentioned synthetic resins, synthetic rubber such as ethylene-propylene rubber and ethylenepropylenediene rubber, or foams, and is formed from fibers such as paper, nonwoven cloth, or textile fabric.
In the bending portion 18, the first flexible sheet 36 can flexibly bend the bending portion 18, allowing the liquid and/or the foreign matters flowing into the cowl space 26 (see FIG. 3) in the cowl portion 24 of the vehicle 21 to pass through.

FIG. 20 is a perspective view illustrating an eleventh embodiment of the present invention, FIG. 21 is an enlarged perspective view illustrating a flexure portion of FIG. 20, FIG. 22 is an enlarged sectional view, taken along the line E-E shown in FIG. 20, illustrating an elastic member of FIG. 20, and FIG. 23 shows drawings for explaining a method for adhesively bonding an elastic member to the peripheral portion.
In FIG. 20, the shield plate 1 further includes a second flexible sheet 37 as a flexible sheet.

The second flexible sheet 37 is laminated on the right side surface of the flat plate shaped member 2, and specifically, positioned so as to include the second projection 53 of the flat plate shaped member 2 in side view.
In other words, the second flexible sheet 37 includes an extending portion 38 which extends outward (frontward, rearward, and downward) from the peripheral portion of the second projection 53 of the flat plate shaped member 2.
The second flexible sheet 37 is formed from the same material as used for forming the above-mentioned first flexible sheet 36, and is formed preferably from the above-mentioned synthetic rubber.

The second flexible sheet 37 includes a flexure portion 39 and a bellows-like portion 40.
The flexure portion 39 is formed by deflecting the extending portion 38 partway in the extending direction toward the left side as indicated by the arrow in FIG. 21, and then bonding the front end portion of the extending portion 38 to the left side surface of the peripheral portion of the flat plate shaped member 2 via an adhesive, which is not shown.
As shown in FIG. 20, the bellows-like portion 40 is extended forward from the front end portion, and is formed in a bellows-like form in cross section. The bellows-like portion 40 has folds 54 formed in spaced relation in the up-and-down direction, each extending along the front-and-rear-direction.

The elastic member 3 includes the above-mentioned elastic layer 44 and the adhesive layer 45 as shown in FIG. 22, and also integrally includes an overlapping portion 46 and an attached portion 47.
The overlapping portion 46 is positioned on the outside (the upper side) of the peripheral portion of the flat plate shaped member 2 and is partitioned as a portion in which the elastic layer 44 is overlapped by mutually bonding via the adhesive layer 45.

The attached portion 47 is continuously bonded from the lower end portion of the overlapping portion 46 to the left and right side surfaces of the peripheral portion of the flat plate shaped member 2 via the adhesive layer 45, to thereby be partitioned as a portion to be stuck on both side surfaces of the peripheral portion of the flat plate shaped member 2.
The elastic member 3 is adhesively bonded to the peripheral portion of the flat plate shaped member 2 in the following manner. First, as shown in FIG. 23(a), an elastic adhesive sheet 55 including the elastic layer 44, the adhesive layer 45 formed on a surface thereof, and a release film 57 formed on a surface thereof is prepared.

Notches 58 are preliminarily formed between the widthwise center and both widthwise ends of the release film 57.
Then, as shown in FIG. 23(b), the release film 57 at the widthwise center is peeled off from the adhesive layer 45 along the notches 58.
Subsequently, as shown in FIG. 23(c), the elastic layer 44 at the widthwise center is bonded to each other so as to be overlapped via the adhesive layer 45. This can form the overlapping portion 46 and the attached portion 47 continuously extends therefrom in two directions.

Then, as shown in FIG. 23(d), the release film 57 in the attached portion 47 is peeled off from the adhesive layer 45, and the elastic layer 44 in the attached portion 47 is opposed to the end face of the peripheral portion of the flat plate shaped member 2. Subsequently, as shown in FIG. 23(e), the elastic layer 44 in the attached portion 47 is adhesively bonded to the left and right side surfaces of the peripheral portion via the adhesive layer 45.
In the shield plate 1, the flexible extending portion 38 can be reliably attached to the cowl portion 24 (see FIG. 3) where the shield plate 1 is mounted.

On the other hand, bending of the flexible extending portion 38 allows the shield plate 1 to be reliably positioned in the cowl portion 24 having a complex shape, or bending of the flexible extending portion 38 in the left-and-right direction allows the liquid and/or the foreign matters in the cowl space 26 (see FIG. 3) in the cowl portion 24 to pass through.
With the shield plate 1, the attached portion 47 can fix the overlapping portion 46 to the flat plate shaped member 2, and the overlapping portion 46 can also be reliably firmly stuck to the cowl portion 24.

The overlapping width W of the overlapping portion 46 (see FIG. 22) can be set to a fixed value, so that the shielding effect by the overlapping portion 46 can be further enhanced.
Further, the positioning (see FIG. 23(d)) of the elastic member 3 relative to the end face of the peripheral portion of the flat plate shaped member 2, a continuing section of the overlapping portion 46 and the attached portion 47 is opposed to the center of the end face of the peripheral portion, whereby the attached portion 47 can be well-balanced and easily positioned on the right side surface and the left side surface of the peripheral portion and can be adhesively bonded thereto.
While the illustrative embodiments of the present invention are provided in the above description, such is for illustrative purpose only and it is not to be construed restrictively. Modification and variation of the present invention that will be obvious to those skilled in the art is to be covered by the following claims.

### INDUSTRIAL APPLICABILITY

A shield plate is for use as, for example, a space partition of cowl members of vehicles, or the like.

## Claims

1. A shield plate comprising:
a flat plate shaped member (2); and
stress-concentrating portions which is formed over the entire surface of the flat plate shaped member (2) and bends when an external force is applied, wherein
the flat plate shaped member (2) comprises a first plate (5); a second plate (6) opposed to the first plate (5); and a plurality of struts (7) installed between the first plate (5) and the second plate (6), **characterised in that**
the stress-concentrating portions are frangible portions (8) formed between the struts (7) over the entire flat plate shaped member (2),
the flat plate shaped member (2) has the frangible portion (8) formed along at least one direction, and
the flat plate shaped member (2) is bent in the frangible section by the first plate (5) being bent toward a first side or the second plate (6) being bent toward a second side that is opposite to the first side.

2. The shield plate according to claim 1, wherein the flat plate shaped member (2) has a plurality of the frangible portions (8) parallely-arranged at spaced intervals in a direction orthogonal to a direction in which the frangible portions (8) are formed.

3. The shield plate according to claim 1, wherein
the flat plate shaped member (2) has
the frangible portions (8) formed along a frangible portion formation direction (F) between the struts (7),
a plurality of the frangible portions (8) being parallely-arranged at spaced intervals in a direction orthogonal to the frangible portion formation direction (F).

4. The shield plate according to claim 1, wherein
the edgewise crush resistance in a direction in which the frangible portions (8) are parallely-arranged is 0.02 to 0.9 times higher than the edgewise crush resistance in a direction in which the frangible portions (8) are formed.

5. The shield plate according to claim 1, further comprising a reinforcing portion partially formed in the flat plate shaped member (2).

6. The shield plate according to claim 1, further comprising a bending portion (18), different from the stress-concentrating portion, partially formed in the flat plate shaped member (2) and bends when an external force is applied.

7. The shield plate according to claim 6, wherein the bending portion (18) is formed along one direction and is bendable along the one direction when the shield plate (1) is mounted to a structural member and/or when flow of a liquid and/or a solid arises in a space of the structural member.

8. The shield plate according to claim 6, wherein
the bending portion (18) is formed by hot pressing in a thickness direction of the flat plate shaped member (2),
a single-cut line (30) inclined along the one direction is formed in one surface and the other surface of the bending portion (18),
the single-cut line (30) in one surface of the bending portion (18) and the single-cut line in the other surface of the bending portion (18) intersect when projected in the thickness direction.

9. The shield plate according to claim 1, wherein an elastic member (3) is provided in at least one portion of the peripheral portion of the flat plate shaped member (2).

10. The shield plate according to claim 9, wherein
the elastic member (3) comprises
a fitting portion (9) which fits over the peripheral portion so as to sandwich the peripheral portion; and
an elastic portion (10) positioned on the opposite side of the flat plate shaped member (2) relative to the fitting portion (9).

11. The shield plate according to claim 9, wherein
the elastic member (3) comprises an elastic layer (44) and an adhesive layer (45) formed on a surface of the elastic layer (44), and
the elastic member (3) has
an overlapping portion (46) positioned outside the peripheral portion and overlapped by mutually bonding the elastic layer (44) via the adhesive layer (45), and
an attached portion (47) stuck to the peripheral portion by continuously bonding one surface and the other surface of the peripheral portion.

12. The shield plate according to claim 1, further comprising a flexible sheet (37) laminated on at least one surface of the flat plate shaped member (2), comprising an extending portion (38) extended outward from the peripheral portion of the flat plate shaped member (2).

13. The shield plate according to claim 1, further comprising a fixing member (4) attached to the flat plate shaped member (2) and fixable to a space of a structural member.

14. A vehicle structure, wherein the vehicle structure is provided with a shield plate according to claims 1 to 13.

## Patentansprüche

1. Abschirmplatte, die umfasst:
ein flaches plattenförmiges Element (2); und
belastungskonzentrierende Abschnitte, die über der gesamten Fläche des flachen plattenförmigen Elements (2) gebildet sind und sich biegen, wenn eine externe Kraft ausgeübt wird, wobei
das flache plattenförmige Element (2) eine erste Platte (5); eine zweite Platte (6) gegenüber der ersten Platte (5) und mehrere Streben (7), die zwischen der ersten Platte (5) und der zweiten Platte (6) eingebaut sind, umfasst,
**dadurch gekennzeichnet, dass**
die belastungskonzentrierenden Abschnitte zerbrechliche Abschnitte (8) sind, die zwischen den Streben (7) über dem gesamten flachen plattenförmigen Element (2) gebildet sind,
das flache plattenförmige Element (2) die zerbrechlichen Abschnitte (8), die entlang mindestens einer Richtung gebildet sind, aufweist und
das flache plattenförmige Element (2) in dem zerbrechlichen Abschnitt dadurch gebogen wird, dass die erste Platte (5) in Richtung einer ersten Seite gebogen wird oder die zweite Platte in Richtung einer zweiten Seite, die der ersten Seite gegenüberliegt, gebogen wird.

2. Abschirmplatte nach Anspruch 1, wobei das flache plattenförmige Element (2) mehrere zerbrechliche Abschnitte (8) aufweist, die in Abstandsintervallen in einer Richtung senkrecht zu einer Richtung, in der die zerbrechlichen Abschnitte (8) gebildet sind, parallel angeordnet sind.

3. Abschirmplatte nach Anspruch 1, wobei
das flache plattenförmige Element (2) aufweist:
die zerbrechliche Abschnitte (8), die entlang einer Bildungsrichtung (F) der zerbrechlichen Abschnitte zwischen den Streben (7) gebildet sind,
mehrere zerbrechlichen Abschnitte (8), die in regelmäßigen Abständen in einer Richtung senkrecht zu der Bildungsrichtung der zerbrechlichen Abschnitte (F) parallel angeordnet sind.

4. Abschirmplatte nach Anspruch 1, wobei
der Kantenstauchwiderstand in einer Richtung, in der die zerbrechlichen Abschnitte (8) parallel angeordnet sind, 0,02 bis 0,9 mal größer als der Kantenstauchwiderstand in einer Richtung, in der die zerbrechlichen Abschnitte (8) gebildet sind, ist.

5. Abschirmplatte nach Anspruch 1, die ferner einen Verstärkungsabschnitt umfasst, der teilweise in dem flachen plattenförmigen Element (2) gebildet ist.

6. Abschirmplatte nach Anspruch 1, die ferner einen Biegeabschnitt (18) umfasst, der von dem belastungskonzentrierenden Abschnitt verschieden ist und der teilweise in dem flachen plattenförmigen Element (2) gebildet ist und sich biegt, wenn eine externe Kraft ausgeübt wird.

7. Abschirmplatte nach Anspruch 6, wobei der Biegeabschnitt (18) entlang einer Richtung gebildet ist und entlang der einen Richtung biegbar ist, wenn die Abschirmplatte (1) auf einem Strukturelement befestigt ist und/oder wenn ein Fluss einer Flüssigkeit und/oder eines Festkörpers in einem Bereich des Strukturelements auftritt.

8. Abschirmplatte nach Anspruch 6, wobei
der Biegeabschnitt (18) durch Heißpressen in einer Richtung der Dicke des flachen plattenförmigen Elements (2) gebildet ist,
eine Einzelschnittlinie (30), die entlang der einen Richtung geneigt ist, in einer Fläche und der anderen Fläche des Biegeabschnitts (18) gebildet ist,
die Einzelschnittlinie (30) in einer Fläche des Biegeabschnitts (18) und die Einzelschnittlinie in der anderen Fläche des Biegeabschnitts (18) sich kreuzen, wenn sie in Dickenrichtung projiziert werden.

9. Abschirmplatte nach Anspruch 1, wobei ein elastisches Element (3) in mindestens einem Abschnitt des Umfangsabschnitts des flachen plattenförmigen Elements (2) vorgesehen ist.

10. Abschirmplatte nach Anspruch 9, wobei
das elastische Element (3) umfasst:
einen Einpassabschnitt (9), der über den Umfangsabschnitt passt, um den Umfangsabschnitt einzuschließen; und
einen elastischen Abschnitt (10), der auf der gegenüberliegenden Seite des flachen plattenförmigen Elements (2) bezüglich des Einpassabschnitts (9) positioniert ist.

11. Abschirmplatte nach Anspruch 9, wobei
das elastische Element (3) eine elastische Schicht (44) und eine Klebschicht (45), die auf einer Fläche der elastischen Schicht (44) gebildet ist, umfasst und
das elastische Element (3) aufweist:
einen Überdeckungsabschnitt (46), der außerhalb des Umfangsabschnitts positioniert ist und der durch gegenseitiges Verbinden der elastischen Schicht (44) über die Klebschicht (45) überdeckt wird und
einen befestigten Abschnitt (47), der an den Umfangsabschnitt angeklebt wird, indem eine Fläche und die andere Fläche des Umfangsabschnitts fortlaufend verbunden werden.

12. Abschirmplatte nach Anspruch 1, die ferner eine flexible Lage (37) umfasst, die auf mindestens eine Fläche des flachen plattenförmigen Elements (2) laminiert ist und die einen Verlängerungsabschnitt (38) umfasst, der von dem Umfangsabschnitt des flachen plattenförmigen Elements (2) nach außen verlängert ist.

13. Abschirmplatte nach Anspruch 1, die ferner ein Befestigungselement (4) umfasst, das an dem flachen plattenförmigen Element (2) befestigt ist und an einem Bereich eines Strukturelements befestigbar ist.

14. Fahrzeugstruktur, wobei die Fahrzeugstruktur mit einer Abschirmplatte nach den Ansprüchen 1 bis 13 versehen ist.

## Revendications

1. Plaque de protection comprenant :
un organe en forme de plaque plate (2) ; et
des portions de concentration de contrainte qui sont formées sur la surface entière de l'organe en forme de plaque plate (2) et se courbent lorsqu'une force externe est appliquée, dans laquelle
l'organe en forme de plaque plate (2) comprend une première plaque (5) ; une seconde plaque (6) opposée à la première plaque (5) ; et une pluralité d'entretoises (7) installées entre la première plaque (5) et la seconde plaque (6),
**caractérisée en ce que**
les portions de concentration de contrainte sont des portions frangibles (8) formées entre les entretoises (7) sur l'organe en forme de plaque plate (2) entier,
l'organe en forme de plaque plate (2) a la portion frangible (8) formée le long d'au moins une direction, et
l'organe en forme de plaque plate (2) est courbé dans la section frangible par la première plaque (5) qui est courbée vers un premier côté ou la seconde plaque (6) qui est courbée vers un second côté qui est opposé au premier côté.

2. Plaque de protection selon la revendication 1, dans laquelle l'organe en forme de plaque plate (2) a une pluralité des portions frangibles (8) agencées parallèlement à des intervalles espacés dans une direction orthogonale à une direction dans laquelle les portions frangibles (8) sont formées.

3. Plaque de protection selon la revendication 1, dans laquelle
l'organe en forme de plaque plate (2) a
les portions frangibles (8) formées le long d'une direction de formation de portion frangible (F) entre les entretoises (7),
une pluralité des portions frangibles (8) étant agencées parallèlement à des intervalles espacés dans une direction orthogonale à la direction de formation de portion frangible (F).

4. Plaque de protection selon la revendication 1, dans laquelle la résistance à la compression de chant dans une direction dans laquelle les portions frangibles (8) sont agencées parallèlement est 0,02 à 0,9 fois plus élevée que la résistance à la compression de chant dans une direction dans laquelle les portions frangibles (8) sont formées.

5. Plaque de protection selon la revendication 1, comprenant en outre une portion de renforcement formée partiellement dans l'organe en forme de plaque plate (2).

6. Plaque de protection selon la revendication 1, comprenant en outre une portion de courbage (18), différente de la portion de concentration de contrainte, formée partiellement dans l'organe en forme de plaque plate (2) et qui se courbe lorsqu'une force externe est appliquée.

7. Plaque de protection selon la revendication 6, dans laquelle la portion de courbage (18) est formée le long d'une direction et peut être courbée le long de la une direction lorsque la plaque de protection (1) est montée sur un organe structurel et/ou lorsqu'un flux d'un liquide et/ou d'un solide apparaît dans un espace de l'organe structurel.

8. Plaque de protection selon la revendication 6, dans laquelle
la portion de courbage (18) est formée par pressage à chaud dans une direction d'épaisseur de l'organe en forme de plaque plate (2),
une ligne à taille simple (30) inclinée le long de la une direction est formée dans une surface et l'autre surface de la portion de courbage (18),
la ligne à taille simple (30) dans une surface de la portion de courbage (18) et la ligne à taille simple dans l'autre surface de la portion de courbage (18) se croisent lorsqu'elles sont projetées dans la direction d'épaisseur.

9. Plaque de protection selon la revendication 1, dans laquelle un organe élastique (3) est prévu dans au moins une portion de la portion périphérique de l'organe en forme de plaque plate (2).

10. Plaque de protection selon la revendication 9, dans laquelle
l'organe élastique (3) comprend
une portion d'ajustement (9) qui s'ajuste sur la portion périphérique de façon à prendre en sandwich la portion périphérique ; et
une portion élastique (10) positionnée sur le côté opposé de l'organe en forme de plaque plate (2) par rapport à la portion d'ajustement (9).

11. Plaque de protection selon la revendication 9, dans laquelle
l'organe élastique (3) comprend une couche élastique (44) et une couche adhésive (45) formée sur une surface de la couche élastique (44), et
l'organe élastique (3) possède
une portion de chevauchement (46) positionnée à l'extérieur de la portion périphérique et chevauchée en liant mutuellement la couche élastique (44) via la couche adhésive (45), et
une portion attachée (47) collée à la portion périphérique en liant continument une surface et l'autre surface de la portion périphérique.

12. Plaque de protection selon la revendication 1, comprenant en outre une feuille flexible (37) laminée sur au moins une surface de l'organe en forme de plaque plate (2), comprenant une portion d'extension (38) s'étendant vers l'extérieur depuis la portion périphérique de l'organe en forme de plaque plate (2).

13. Plaque de protection selon la revendication 1, comprenant en outre un organe de fixation (4) attaché à l'organe en forme de plaque plate (2) et pouvant être fixé à un espace d'un organe structurel.

14. Structure de véhicule, dans laquelle la structure de véhicule est munie d'une plaque de protection selon les revendications 1 à 13.
